# FASCICULE DE BREVET EUROPEEN

(11) **EP 4 018 874 B1**
(45) Date de publication et mention de la délivrance du brevet: **27.03.2024**
(21) Numéro de dépôt: 20216324.2
(22) Date de dépôt: 22.12.2020
(51) Int. Cl.: A44C 5/02, A44C 5/10, A44C 27/00, B29C 45/00, B29C 45/44, B29C 45/52

(54) **ASSEMBLAGE D'ELEMENTS TELS QUE DES MAILLONS D'UN BRACELET**
ZUSAMMENBAU VON ELEMENTEN WIE DEN KETTENGLIEDERN EINES ARMBANDS
ASSEMBLY OF ELEMENTS SUCH AS LINKS OF A BRACELET

(43) Date de publication de la demande: 29.06.2022
(73) Titulaire: Comadur S.A., 2400 Le Locle (CH)
(72) Inventeur: AREDE, Paulo, 2300 La Chaux-de-Fonds (CH); VUILLE, Pierry, 2338 Les Emibois (CH); ROMAND, Johan, 25620 Mamirolle (FR); DOLE, Maxime, 25390 Loray (FR)
(74) Mandataire: ICB SA

(56) Documents cités:
- EP-A1- 0 516 164
- CH-A2- 713 337
- FR-A1- 3 069 179
- JP-A- 2018 099 447
- US-A1- 2017 042 297

## Description

### Domaine de l'invention

L'invention se rapporte à un assemblage d'éléments et plus précisément à une pièce comprenant plusieurs ensembles d'éléments assemblés entre eux. Les éléments peuvent former les maillons d'un bracelet, d'un article décoratif ou d'un article de joaillerie.

### Art antérieur

Dans l'industrie horlogère ou en bijouterie, des matériaux variés sont utilisés pour la fabrication de bracelets d'aspect divers. Il est en particulier connu de fabriquer des bracelets dans un matériau dur. Par matériau dur, on entend les matériaux présentant une dureté Vickers supérieure à 1000 HV. Ces matériaux durs sont, par exemple, de la céramique telle que du nitrure de silicium, de l'oxyde de zirconium ou de l'oxyde d'aluminium. Il peut également s'agir de cermets. Les matériaux durs sont utilisés pour leurs propriétés mécaniques, en particulier parce qu'ils se rayent difficilement. Les maillons de bracelet réalisés dans ces matériaux sont généralement obtenus après une étape d'injection donnant la forme souhaitée au maillon, puis par une étape de frittage pour durcir le matériau.

L'assemblage des maillons de bracelets nécessite la présence de trous munis d'un taraudage sur le maillon pour le vissage d'une vis ou d'un élément muni d'un filetage. L'usinage de ces taraudages dans un matériau dur est difficile.

En outre, la réalisation de taraudage requiert des moules complexes qui limitent les possibilités d'injection sur ces maillons. Ainsi, le point d'injection doit être disposé sur une face ne comprenant pas le taraudage, c'est-à-dire sur une face visible du maillon. Au niveau de ce point d'injection, il peut y avoir des défauts tels que des ségrégations, des lignes de flux et ce en particulier lors de l'injection de céramiques colorées. La présence de ces défauts sur une face visible nécessite d'usiner cette face pour supprimer les défauts. Il n'est donc pas possible d'injecter directement le maillon dans sa forme finale.

Le document US2017042297 divulgue une pièce selon le préambule de la revendication 1.

### Résumé de l'invention

Le but de la présente invention est de pallier les inconvénients précités en proposant un montage sans vissage entre les maillons permettant d'éviter la réalisation de taraudages au sein du maillon.

A cet effet, l'invention se rapporte à une pièce, en particulier un bracelet, comprenant au moins deux ensembles d'éléments, en particulier des maillons, assemblés entre eux. Selon l'invention, la fixation entre les éléments au sein d'un ensemble et entre ensembles est réalisée via un collage et non pas un vissage.

Plus précisément, la présente invention se rapporte à une pièce comprenant au moins deux ensembles d'éléments assemblés entre eux, chaque ensemble comportant un premier, un deuxième et un troisième éléments avec le premier élément et le deuxième élément disposés de part et d'autre du troisième élément. Le premier et le deuxième éléments comportent chacun un premier et un deuxième évidements borgnes et le troisième élément comporte un premier et un deuxième trous traversants, le premier trou traversant du troisième élément étant placé en regard du premier évidement borgne des premier et deuxième éléments au sein de chaque ensemble, le deuxième trou traversant du troisième élément d'un ensemble étant placé en regard du deuxième évidement borgne des premier et deuxième éléments d'un autre ensemble. La fixation au sein de chaque ensemble et entre les deux ensembles est respectivement assurée par :
- une première tige montée dans le premier trou traversant du troisième élément et fixée à ses extrémités avec une colle dans le premier évidement borgne des premier et deuxième éléments,
- une deuxième tige montée dans le deuxième trou traversant du troisième élément et fixée à ses extrémités avec ladite colle dans le deuxième évidement borgne des premier et deuxième éléments.

Selon l'invention, les évidements borgnes ont une forme particulière qui permet d'assurer l'ancrage des tiges au sein des évidements borgnes. Le premier évidement borgne et le deuxième évidement borgne délimitent de manière conventionnelle une zone longitudinale pour le logement de l'extrémité des première et deuxième tiges. Selon l'invention, cette zone longitudinale débouche sur deux cavités s'étendant latéralement par rapport à ladite zone longitudinale. Chaque cavité forme un logement où la colle est contenue et figée autour de l'extrémité des tiges, ce qui assure leur maintien ferme au sein de l'évidement.

Ledit premier évidement borgne et ledit deuxième évidement borgne délimitent chacun deux cavités s'étendant latéralement par rapport à la zone longitudinale, les deux cavités étant respectivement positionnées de chaque côté de la zone longitudinale.

Ainsi, les cavités permettent de réaliser une accroche mécanique entre la colle et les maillons, ce qui permet de solidariser fermement les différents ensembles.

En outre, la fixation par collage permet de diminuer les coûts de montage du bracelet et de simplifier le montage.

L'absence de taraudage dans les évidements borgnes permet également de simplifier le moule d'injection avec pour corollaire que le point d'injection peut être sur la face comprenant les évidements borgnes, c'est-à-dire sur une face non visible. Cela permet d'éviter l'étape d'usinage et d'injecter directement à forme le maillon.

Selon des modes particuliers de l'invention, la pièce présente une ou une combinaison appropriée des caractéristiques suivantes :
- les deux cavités sont positionnées l'une en face de l'autre de chaque côté de la zone longitudinale ;
- la zone longitudinale s'étend de part et d'autre de ladite au moins cavité ;
- la première tige et la deuxième tige comportent à leurs extrémités une tête munie d'une encoche sur son pourtour, ladite encoche étant remplie avec la colle et positionnée en regard de ladite au moins cavité ;
- au moins une partie des premier et deuxième éléments est réalisée dans un émail, une pierre, un saphir, un cermet ou une céramique.
- au sein de chaque ensemble, le troisième élément est formé de plusieurs éléments avec un élément intermédiaire disposé entre chacun desdits plusieurs éléments ;
- le premier trou traversant et/ou le deuxième trou traversant du troisième élément comportent une section transversale de forme correspondante non circulaire avec celle respectivement de la première et de la deuxième tiges afin d'empêcher tout pivotement relatif des premier, deuxième et troisième éléments ;
- le premier trou traversant et le deuxième trou traversant du troisième élément comportent une section transversale de forme correspondante circulaire avec celle de la première et de la deuxième tiges afin d'autoriser le pivotement du troisième élément par rapport aux premier et deuxième éléments ;
- elle comporte au moins cinq ensembles reliés entre eux ;
- il s'agit d'un bracelet, un article décoratif ou un article de joaillerie.

Le procédé de fabrication de la pièce, qui ne fait pas partie de la présente invention, comporte une étape de réalisation d'au moins un des premier, deuxième et troisième éléments par fabrication additive ou par injection et frittage et comportant une étape d'assemblage et de fixation par collage des premier, deuxième et troisième éléments.

Selon un mode particulier du procédé, le premier élément et le deuxième élément sont réalisés par injection et frittage selon les étapes suivantes :
a) une étape de réalisation d'un précurseur à partir d'un mélange d'au moins un matériau en poudre avec un liant,
b) une étape de réalisation d'un insert en matériau polymère, l'insert ayant au moins en partie une forme en négatif des premier et deuxième évidements borgnes,
c) une étape de surmoulage du précurseur sur l'insert en matériau polymère par injection dans un moule afin de former un corps vert, et
d) une étape de frittage dudit corps vert afin de former lesdits premier élément et deuxième élément dans ledit matériau.

D'autres caractéristiques et avantages de la présente invention apparaîtront dans la description suivante d'un mode de réalisation préféré, présenté à titre d'exemple non limitatif en référence aux dessins annexés.

### Brève description des figures

La figure 1 est une vue en coupe d'une pièce selon l'invention avec un montage par collage entre les maillons.
La figure 2 est une vue en plan d'une autre pièce selon l'invention avec le montage par collage entre les maillons.
Les figures 3a et 3b illustrent l'étape de fixation par collage de la tige dans un maillon.
La figure 4 est un schéma synoptique du procédé pour réaliser les maillons munis d'un évidement borgne.
Les figures 5a à 5c représentent des vues en coupe schématique d'un maillon obtenu selon le procédé de la figure 4.
La figure 6 est une vue en perspective d'un maillon selon l'invention.

### Description détaillée

La présente invention se rapporte à un assemblage d'éléments qui sont, par exemple, des maillons destinés à former un bracelet, un article décoratif ou un article de joaillerie. Le montage est plus spécifiquement adapté pour des éléments réalisés en tout ou partie avec des matériaux durs. Le terme « matériaux durs » selon l'invention désigne des matériaux dont la dureté est sensiblement égale ou supérieure à 600 HV, voire égale ou supérieure à 1000 HV, et qui acceptent peu ou pas de déformation plastique avant de rompre. On peut citer, à titre nullement limitatif, comme matériaux durs, par exemple, les émaux, les pierres précieuses ou non telles que le rubis, le saphir ou le quartz, les céramiques telles qu'un oxyde, un carbure ou un nitrure métallique ou non-métallique, les cermets ou encore les métaux durs.

La pièce selon l'invention, qui est illustrée ci-après pour un bracelet, comporte au moins deux ensembles d'éléments assemblés entre eux. Selon l'invention, la fixation entre les éléments au sein d'un ensemble et entre ensembles est réalisée par collage.

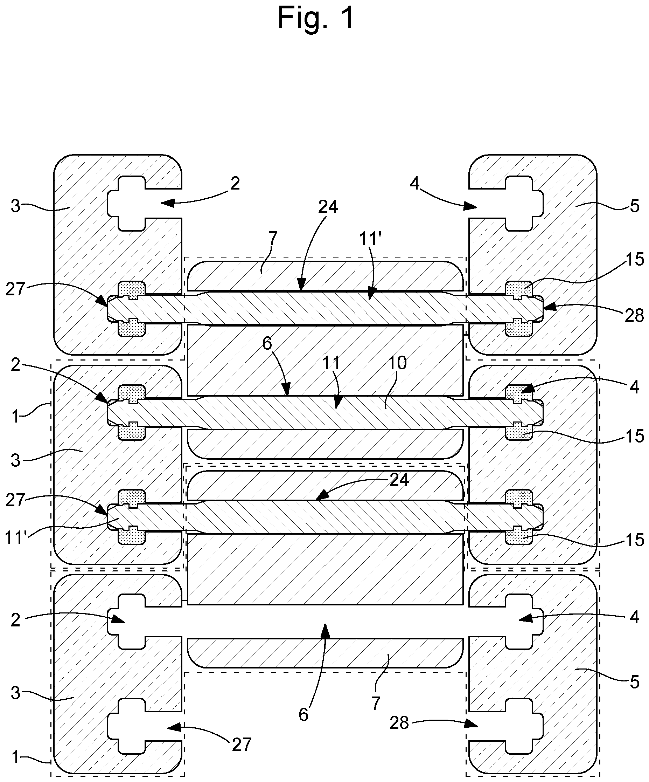

Chaque ensemble 1, délimité par des pointillés à la figure 1, comporte au moins trois éléments 3,5,7 pouvant être formés en tout ou partie en matériaux durs. Il comporte un premier élément 3 latéral et un deuxième élément 5 latéral sensiblement symétriques par rapport à un troisième élément 7 disposé entre les éléments latéraux. On remarque que les éléments 3,5,7 sont préférentiellement montés en quinconce.

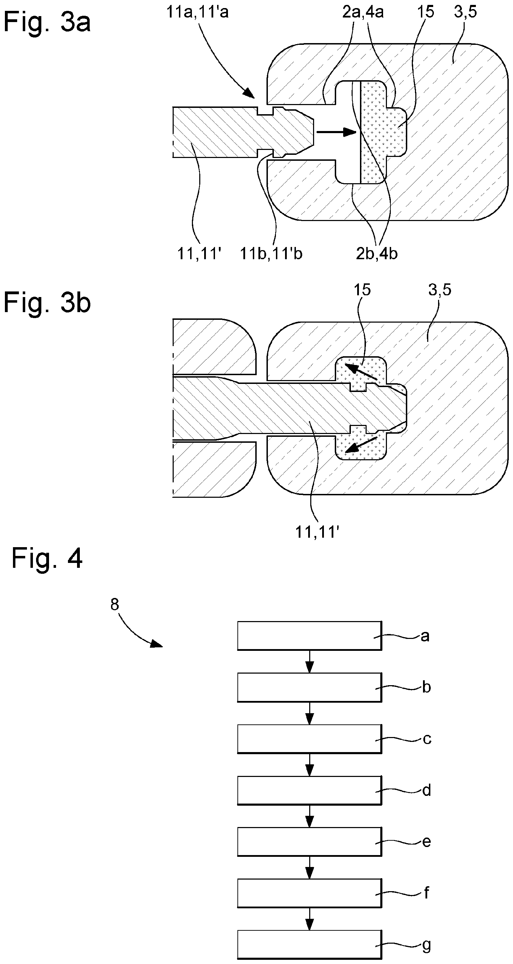

Les premier et deuxième éléments 3,5 comportent chacun un premier évidement borgne 2,4 alors que le troisième élément 7 comporte un premier trou traversant 6. Comme montré à la figure 1, les évidements 2,4 et le trou 6 sont destinés à être alignés afin de solidariser les premier, deuxième et troisième éléments 3,5,7 ensemble via une tige 11 montée dans le trou traversant 6 du troisième élément 7 central et collée à ses extrémités au sein des évidements 2,4. Les évidements borgnes 2,4 délimitent une zone longitudinale 2a,4a pour le logement des extrémités de la tige 11 et deux cavités 2b,4b s'étendant latéralement par rapport à ladite zone longitudinale (fig.3a). Ces cavités reçoivent la colle 15 pour assurer une accroche mécanique de la colle au sein des premier et deuxième éléments (fig.3b). Les deux cavités latérales 2b,4b sont disposées de part et d'autre de la zone longitudinale 2a,4a et préférentiellement l'une en face de l'autre. Toujours de préférence, la zone longitudinale 2a,4a s'étend de part et d'autre des cavités 2b,4b avec l'extrémité de la tige 11 qui prend appui contre l'extrémité de la zone longitudinale 2a,4a.

En outre, de préférence, la tige 11 comporte à ses extrémités une tête 11a avec une encoche 11b ménagée sur tout son pourtour. Cette encoche est remplie avec la colle et disposée en regard des cavités. La tige 11 comporte une partie principale 10 reçue dans le trou traversant 6 du troisième élément 7 (fig.1). Selon le jeu laissé ou la forme respective du trou traversant 6 et de la partie 10, les premier et deuxième éléments 3,5 latéraux pourront pivoter ou non par rapport au troisième élément 7 central. A titre d'exemple nullement limitatif, le trou traversant 6 peut comporter une section transversale de forme correspondante non circulaire avec celle de la partie centrale 10 de la tige 11 afin d'empêcher tout pivotement relatif des premier, deuxième et troisième 3,5,7 éléments. Au contraire, il peut être envisagé que le trou traversant 6 comporte une section transversale de forme correspondante circulaire avec celle de la partie 10 de la tige 11 afin d'autoriser le pivotement du troisième élément 7 central par rapport aux premier et deuxième éléments 3,5 latéraux.

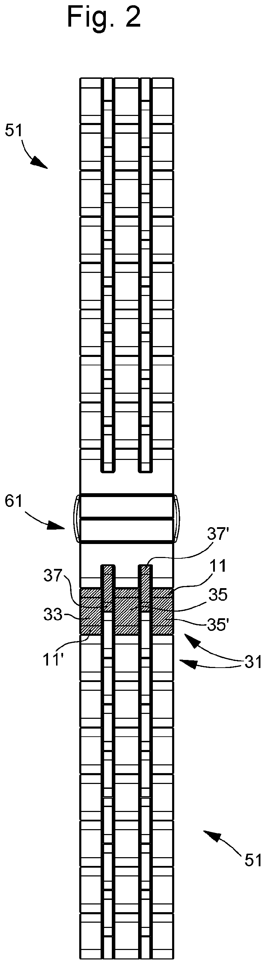

Dans une variante présentée à la figure 2, chaque ensemble 31 comporte cinq éléments. En effet, en plus des trois éléments 33,35',37 comparables à ceux 3,5,7 du premier type d'ensemble 1, l'ensemble 31 du deuxième type comporte une rangée intercalaire avec un deuxième élément central 37' et un élément intermédiaire 35.

L'ensemble 1,31 est assemblé avec un autre ensemble et ainsi de suite de manière à former une pièce telle que, par exemple, un bracelet, un article décoratif ou un article de joaillerie. Comme montré à la figure 2, plusieurs ensembles 31 peuvent être reliés entre eux par un fermoir 61 afin de former le bracelet destiné à être monté sur une carrure de pièce d'horlogerie.

Les deux ensembles 1,31 sont également reliés entre eux via une tige 11' montée dans un deuxième trou traversant 24 du troisième élément 7 d'un ensemble 1. Chaque extrémité de la tige 11' est montée et collée respectivement dans un deuxième évidement borgne 27,28 pratiqué dans un premier et deuxième éléments 3, 5 d'un autre ensemble 1 adjacent. La tige 11' destinée à être montée dans le deuxième trou traversant 24 a une configuration semblable à celle destinée à être montée dans le premier trou traversant 6. De même, les évidements borgnes 27, 28 présentent les mêmes caractéristiques que les évidements borgnes 2,4.

On comprend que, comme pour le premier trou traversant 6, suivant le jeu laissé ou la forme respective du trou traversant 24 et de la tige 11' le troisième élément 7 central pourra pivoter ou non par rapport aux premier et deuxième éléments 3,5 latéraux qui l'encadrent. Tout comme pour le premier trou traversant 6, le trou traversant 24 peut comporter une section transversale de forme correspondante non circulaire avec celle de la tige 11' afin d'empêcher tout pivotement relatif entre le troisième élément et les premier et deuxième éléments latéraux. Au contraire, il peut être envisagé que le trou traversant 24 comporte une section transversale de forme correspondante circulaire avec celle de la tige 11' afin d'autoriser ce pivotement relatif.

Le procédé de montage des ensembles 1 est expliqué ci-dessous. Dans un premier temps, les éléments 3,5,7 sont fabriqués avec les différents trous ou évidements 2,4,6,27,28,24. De préférence, au moins les éléments 3,5 avec les évidements borgnes 2,4,27,28 sont réalisés par fabrication additive ou par injection et frittage selon un procédé décrit plus en détail ci-après. Dans un deuxième temps, les tiges 11,11' sont montées et fixées par collage respectivement dans les évidements 2 et 27 de l'élément latéral 3 (fig.3a et fig.3b). La colle peut, par exemple, être une colle époxy avec une viscosité > 400 Pas et une résistance à la traction > 40N/mm2. Le collage s'effectue par déposition avec une seringue sous pression. Dans un troisième temps, les parties des tiges 11,11' faisant saillies du premier élément 3 latéral sont enfilées respectivement pour la première tige 11 dans le premier trou traversant 6 d'un troisième élément 7 d'un ensemble 1 et pour la deuxième tige 11' dans le deuxième trou traversant 24 du troisième élément 7 d'un ensemble 1 adjacent. Dans un quatrième temps, la deuxième extrémité de chaque tige 11,11' faisant saillie des troisièmes éléments 7 est montée et fixée par collage dans les évidements 4 et 28 du deuxième élément 5 latéral. A la fin du quatrième temps, les éléments 3, 5 et 7 au sein de chaque ensemble, de même que les ensembles entre eux sont totalement solidaires.

En présence de plus de trois éléments comme illustré à la figure 2, le principe est sensiblement le même avec les éléments 37,37' formant le troisième élément central. Les premier et deuxième trous traversants de ces éléments 37,37' communiquent avec deux trous traversants ménagés respectivement dans les éléments intermédiaires 35 de deux ensembles 31 adjacents pour recevoir respectivement les deux tiges 11,11' s'étendant entre les éléments latéraux 33,35' munis des évidements borgnes.

Comme expliqué ci-avant, les éléments latéraux 3,5 avec les évidements borgnes peuvent être réalisés par fabrication additive ou par injection et frittage. Les évidements borgnes peuvent être réalisés directement lors de la fabrication additive. Pour la fabrication par injection et frittage, les éléments latéraux avec les évidements borgnes peuvent être réalisés par surmoulage du matériau dur sur un insert en plastique perdu ayant la forme des évidements conformément à la demande EP 20194714. Conformément à cette demande et tel que schématisé à la figure 4, le procédé 8 comprend une première étape de réalisation a) d'un précurseur à partir d'un mélange d'au moins un matériau dur qui est en poudre avec un liant. Dans ce contexte, la poudre à base de céramique peut comporter au moins un oxyde métallique, un nitrure métallique ou un carbure métallique. A titre d'exemple, la poudre à base de céramique peut comporter de l'oxyde d'aluminium ou un mélange d'oxyde d'aluminium et d'oxyde de chrome afin de former du rubis synthétique, de l'oxyde de zirconium, qui peut être optionnellement pigmenté, de l'alumine, qui peut être optionnellement pigmenté, du nitrure de silicium, des cermets, des métaux et des composites de ces métaux. Les cermets sont par exemple du carbure de titane ou du carbure de tungstène. Les métaux sont par exemple du tungstène, du titane, de l'inox 316L ou de l'acier, de préférence sans nickel. Le liant est de type organique.

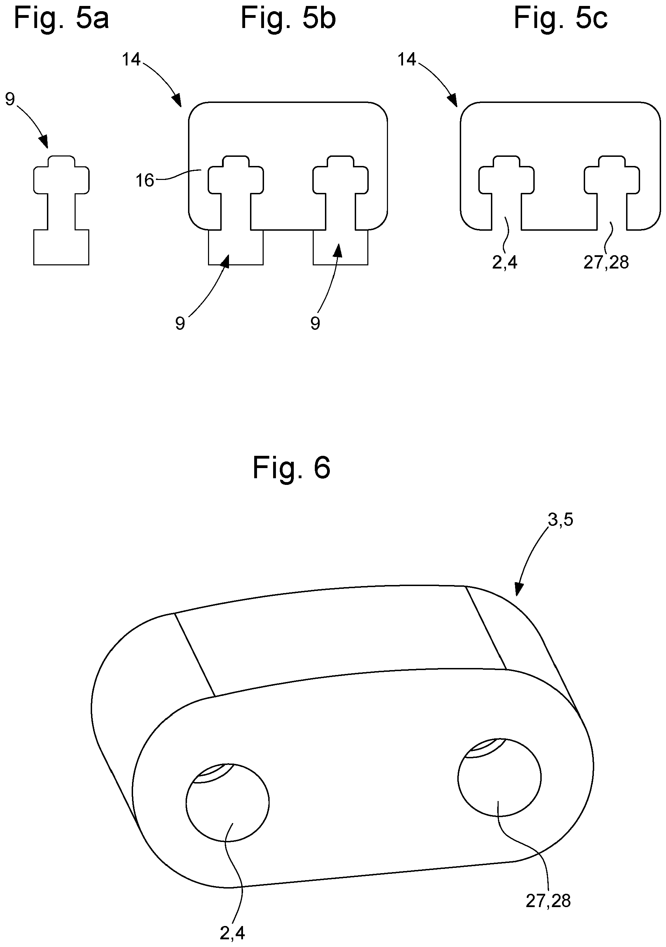

Le procédé 8 comprend une deuxième étape de réalisation b) d'un insert 9 en matériau polymère, l'insert ayant au moins en partie une forme en négatif de celle souhaitée pour les évidements des éléments latéraux 3,5 (fig.5a). Le polymère est par exemple choisi dans la liste suivante : PVD (pour Polyvinyle Butyral plastifié), le CAB (pour Cellulose Acétate Butyrate plastifiée), la résine acrylique de type PBMA (pour Poly butyle méthacrylate).

Une troisième étape c) consiste à surmouler le précurseur 16 sur l'insert 9 en matériau polymère afin de former un corps vert 14 (fig.5b). Le surmoulage est notamment effectué par injection dans un moule. Le moule a au moins en partie la forme de la pièce souhaitée compte tenu d'un coefficient de rétractation de la pièce. Le précurseur est injecté dans le moule par un tube, puis par des circuits de distribution du précurseur dans la totalité du moule. Le précurseur prend ainsi la forme du moule qui est celle des éléments latéraux. En alternative, on peut aussi réaliser l'injection par nappe circulaire ou par canaux. Le corps vert prend la forme du moule et au moins en partie la forme de l'insert sur lequel il est surmoulé.

Dans une quatrième étape d), on usine le corps vert pour éliminer des parties inutiles du corps vert produite par l'injection. On élimine par exemple une tubulure ou des canaux formés à cause de tube ou de circuits de distribution du système d'injection. Ainsi, on obtient un corps vert usiné.

Dans une cinquième étape e), on élimine l'insert 9 en polymère par déliantage thermique. De préférence, on plonge le corps vert surmoulé sur l'insert dans un bain d'alcool à 80°. Le bain d'alcool dissout l'insert en polymère, de sorte qu'on obtient le corps vert avec la forme souhaitée donnée par l'insert. Alternativement, on peut effectuer un déliantage thermique pour supprimer l'insert en polymère. Le corps surmoulé sur l'insert est ainsi chauffé à haute température pour faire disparaître le polymère. Le corps vert est par conséquent débarrassé de l'insert en polymère. L'insert laisse une forme en positif dans le corps vert 14, qui est celle de l'évidement borgne 2,4,27,28 (fig.5c).

La sixième étape f) a pour fonction de fritter ledit corps vert usiné afin de former un corps de la future pièce dans ledit au moins un matériau dur. Le frittage consiste à chauffer le précurseur pour que les grains de poudres s'agglomèrent. Pendant le frittage, le corps vert durcit en se rétractant pour aboutir à un corps dur avec un coefficient de frittage. Préférentiellement selon l'invention, l'étape de frittage peut comporter une pyrolyse. Le corps de la pièce obtenu est substantiellement durci par cette étape. Ainsi, le corps de la pièce a une forme définitive telle que montré à la figure 6.

Une septième étape g) peut aussi être nécessaire pour procéder à un satinage et/ou un polissage du matériau dur. Ainsi, on améliore l'aspect esthétique de l'élément latéral.

Ensuite les éléments latéraux sont assemblés au sein de chaque ensemble conformément au procédé de montage décrit ci-avant.

En variante, pour la fabrication par injection et frittage ainsi que pour la fabrication additive, les évidements borgnes peuvent être réalisés par usinage dans le corps vert avant frittage ou dans le corps dur après frittage.

L'élément central 7 peut également être fabriqué par fabrication additive, ou par injection et frittage.

## Revendications

1. Pièce (21,51) comprenant au moins deux ensembles (1,31) d'éléments (3,5,7,33,35,35',37,37') assemblés entre eux, chaque ensemble (1,31) comportant un premier (3,33), un deuxième (5,35') et un troisième (7,37,37') éléments avec le premier élément (3,33) et le deuxième élément (5,35') disposés de part et d'autre du troisième élément (7,37,37'), le premier (3,33) et le deuxième (5,35') éléments comportant chacun un premier (2,4) et un deuxième évidements borgnes (27,28) et le troisième élément (7,37,37') comportant un premier (6) et un deuxième (24) trous traversants, le premier trou traversant (6) du troisième élément (7,37,37') étant placé en regard du premier évidement borgne (2,4) des premier (3,33) et deuxième (5,35') éléments au sein de chaque ensemble (1,31), le deuxième trou traversant (24) du troisième élément (7,37,37') d'un ensemble (1,31) étant placé en regard du deuxième évidement borgne (27,28) des premier (3,33) et deuxième (5,35') éléments d'un autre ensemble (1,31), la fixation au sein de chaque ensemble (1,31) et entre les deux ensembles (1,31) étant respectivement assurée par :
- une première tige (11) montée dans le premier trou traversant (6) du troisième élément (7,37,37') et fixée à ses extrémités dans le premier évidement borgne (2,4) des premier (3,33) et deuxième (5,35') éléments,
- une deuxième tige (11') montée dans le deuxième trou traversant (24) du troisième élément (7,37,37') et fixée à ses extrémités dans le deuxième évidement borgne (27,28) des premier (3,33) et deuxième (5,35') éléments,
- ladite première tige (11) et ladite deuxième tige (11') sont respectivement fixées dans le premier évidement borgne (2,4) et dans le deuxième évidement borgne (27,28) avec une colle (15),
- ledit premier évidement borgne (2,4) et ledit deuxième évidement borgne (27,28) forment une zone longitudinale (2a,4a) pour le logement respectivement des extrémités de la première (11) et de la deuxième (11') tige, ladite zone longitudinale (2a,4a) débouchant sur au moins une cavité (2b,4b) s'étendant latéralement par rapport à ladite zone longitudinale (2a,4a), ladite cavité (2b,4b) accueillant la colle (15) et assurant une accroche mécanique de la colle (15) au sein des premier (3,33) et deuxième (5,35') éléments la pièce (24,15) étant **caractérisé en ce que** ladite zone longitudinale (2a,4a) débouche sur deux cavités (2b,4b) s'étendant latéralement par rapport à la zone longitudinale (2a,4a), les deux cavités (2b,4b) étant respectivement positionnées de chaque côté de la zone longitudinale (2a,4a).

2. Pièce (21,51) selon la revendication 1, **caractérisée en ce que** les deux cavités (2b,4b) sont positionnées l'une en face de l'autre de chaque côté de la zone longitudinale (2a,4a).

3. Pièce (21,51) selon l'une des revendications précédentes, **caractérisée en ce que** la zone longitudinale (2a,4a) s'étend de part et d'autre de ladite au moins cavité (2b,4b).

4. Pièce (21,51) selon l'une des revendications précédentes, **caractérisée en ce que** la première tige (11) et la deuxième tige (11') comportent à leurs extrémités une tête (11a,11'a) munie d'une encoche (11b,11'b) sur son pourtour, ladite encoche (11b,11'b) étant remplie avec la colle (15) et positionnée en regard de ladite au moins cavité (2b,4b).

5. Pièce (21,51) selon l'une des revendications précédentes, **caractérisée en ce qu'**au moins une partie des premier et deuxième éléments (3, 5, 33, 35') est réalisée dans un émail, une pierre, un saphir, un cermet ou une céramique.

6. Pièce (21,51) selon l'une des revendications précédentes, **caractérisée en ce que**, au sein de chaque ensemble, le troisième élément (7,37,37') est formé de plusieurs éléments (37,37') avec un élément intermédiaire (35) disposé entre chacun desdits plusieurs éléments (37,37').

7. Pièce (21,51) selon l'une des revendications précédentes, **caractérisée en ce que** le premier trou traversant (6) et/ou le deuxième trou traversant (24) du troisième élément (7,37,37') comportent une section transversale de forme correspondante non circulaire avec celle respectivement de la première et de la deuxième tiges (11,11') afin d'empêcher tout pivotement relatif des premier, deuxième et troisième éléments (3,5,33,35',7,37',37).

8. Pièce (21,51) selon l'une des revendications 1 à 6, **caractérisée en ce que** le premier trou traversant (6) et le deuxième trou traversant (24) du troisième élément (7,37,37') comportent une section transversale de forme correspondante circulaire avec celle de la première et de la deuxième tiges (11,11') afin d'autoriser le pivotement du troisième élément (7,37,37') par rapport aux premier et deuxième éléments (3,5,33,35').

9. Pièce (21,51) selon l'une des revendications précédentes, **caractérisée en ce qu'**elle comporte au moins cinq ensembles (1,31) reliés entre eux.

10. Pièce (21,51) selon l'une des revendications précédentes, **caractérisée en ce qu'**il s'agit d'un bracelet, un article décoratif ou un article de joaillerie.

## Patentansprüche

1. Teil (21, 51) mit mindestens zwei Sätzen (1, 31) von Elementen (3, 5, 7, 33, 35, 35', 37, 37'), die zusammengefügt sind, wobei jeder Satz (1, 31) ein erstes (3, 33), ein zweites (5, 35') und ein drittes (7, 37, 37') Element umfasst, wobei das erste (3, 33) und das zweite (5, 35') Element auf jeder Seite des dritten Elements (7, 37, 37') angeordnet sind, wobei das erste (3, 33) und das zweite (5, 35') Element jeweils eine erste (2, 4) und eine zweite Blindaussparung (27, 28) aufweisen und das dritte Element (7, 37, 37') ein erstes (6) und ein zweites (24) Durchgangsloch aufweist, das erste Durchgangsloch (6) des dritten Elements (7, 37, 37') gegenüber der ersten Blindaussparung (2, 4) des ersten (3, 33) und des zweiten (5, 35') Elements aus jedem Satz (1,31) angeordnet ist, wobei das zweite Durchgangsloch (24) des dritten Elements (7, 37, 37') eines Satzes (1, 31) gegenüber der zweiten Blindaussparung (27, 28) des ersten (3, 33) und zweiten (5, 35') Elements eines anderen Satzes (1, 31) angeordnet ist, wobei die Befestigung innerhalb jedes Satzes (1, 31) und zwischen den beiden Sätzen (1, 31) jeweils durch:
- eine erste Welle (11), die in das erste Durchgangsloch (6) des dritten Elements (7, 37, 37') montiert ist und an ihren Enden in der ersten Blindaussparung (2, 4) des ersten (3, 33) und zweiten (5, 35') Elements befestigt ist,
- eine zweite Welle (11'), die in das zweite Durchgangsloch (24) des dritten Elements (7, 37, 37') montiert und an ihren Enden in der zweiten Blindaussparung (27, 28) des ersten (3, 33) und zweiten (5, 35') Elements befestigt ist,
- die erste Welle (11) und die zweite Welle (11') in der ersten Blindaussparung (2, 4) bzw. in der zweiten Blindaussparung (27, 28) mit einem Klebstoff (15) befestigt sind,
- die erste Blindaussparung (2, 4) und die zweite Blindaussparung (27, 28) einen Längsbereich (2a, 4a) bilden, der dazu bestimmt ist, die Enden der ersten (11) bzw. der zweiten (11') Welle aufzunehmen, wobei der Längsbereich (2a, 4a) in mindestens einen Hohlraum (2b, 4b) mündet, der sich seitlich in Bezug auf den Längsbereich (2a, 4a) erstreckt, wobei der Hohlraum (2b, 4b) den Klebstoff (15) aufnimmt und eine mechanische Befestigung des Klebstoffs (15) im ersten (3, 33) und zweiten (5, 35') Element gewährleistet, wobei der Teil (24, 15) **dadurch gekennzeichnet ist, dass** der Längsbereich (2a, 4a) in zwei Hohlräume (2b, 4b) mündet, die sich seitlich in Bezug auf die Längszone (2a, 4a) erstrecken, wobei die beiden Hohlräume (2b, 4b) jeweils auf beiden Seiten des Längsbereichs (2a, 4a) angeordnet sind.

2. Teil (21, 51) nach Anspruch 1, **dadurch gekennzeichnet, dass** die beiden Hohlräume (2b, 4b) einander gegenüberliegend auf jeder Seite des Längsbereichs (2a, 4a) angeordnet sind.

3. Teil (21, 51) nach einem der vorhergehenden Ansprüche, **dadurch gekennzeichnet, dass** sich der Längsbereich (2a, 4a) auf beiden Seiten des mindestens einen Hohlraums (2b, 4b) erstreckt.

4. Teil (21, 51) nach einem der vorhergehenden Ansprüche, **dadurch gekennzeichnet, dass** die erste Welle (11) und die zweite Welle (11') an ihren Enden einen Kopf (11a, 11'a) aufweisen, der an seinem Umfang mit einer Aussparung (11b, 11'b) versehen ist, wobei die Aussparung (11b, 11'b) mit dem Klebstoff (15) gefüllt und gegenüber dem mindestens einen Hohlraum (2b, 4b) angeordnet ist.

5. Teil (21, 51) nach einem der vorhergehenden Ansprüche, **dadurch gekennzeichnet, dass** mindestens ein Teil des ersten und zweiten Elements (3, 5, 33, 35') aus einem Email, einem Stein, einem Saphir, einem Cermet oder einer Keramik hergestellt ist.

6. Teil (21, 51) nach einem der vorhergehenden Ansprüche, **dadurch gekennzeichnet, dass** in jedem Satz das dritte Element (7, 37, 37') durch eine Vielzahl von Elementen (37, 37') gebildet wird, wobei ein Zwischenelement (35) zwischen jedem der Vielzahl von Elementen (37, 37') angeordnet ist.

7. Teil (21, 51) nach einem der vorhergehenden Ansprüche, **dadurch gekennzeichnet, dass** das erste Durchgangsloch (6) und/oder das zweite Durchgangsloch (24) des dritten Elements (7, 37, 37') einen Querschnitt von nicht kreisförmiger Form aufweist, der der Form der ersten bzw. zweiten Welle (11, 11') entspricht, um ein relatives Schwenken des ersten, zweiten und dritten Elements (3, 5, 33, 35', 7, 37', 37) zu verhindern.

8. Teil (21, 51) nach einem der Ansprüche 1 bis 6, **dadurch gekennzeichnet, dass** das erste Durchgangsloch (6) und das zweite Durchgangsloch (24) des dritten Elements (7, 37, 37') einen kreisförmigen Querschnitt aufweisen, der dem der ersten und der zweiten Welle (11, 11') entspricht, um das Schwenken des dritten Elements (7, 37, 37') in Bezug auf das erste und zweite Element (3, 5, 33, 35') zu ermöglichen.

9. Teil (21, 51) nach einem der vorhergehenden Ansprüche, **dadurch gekennzeichnet, dass** es mindestens fünf miteinander verbundene Sätze (1, 31) umfasst.

10. Teil (21, 51) nach einem der vorhergehenden Ansprüche, **dadurch gekennzeichnet, dass** es sich um ein Armband, einen dekorativen Artikel oder ein Schmuckstück handelt.

## Claims

1. Part (21, 51) comprising at least two sets (1, 31) of elements (3, 5, 7, 33, 35, 35', 37, 37') assembled together, each set (1, 31) including a first (3, 33), a second (5, 35') and a third (7, 37, 37') element with the first element (3, 33) and the second element (5, 35') disposed on either side of the third element (7, 37, 37'), the first (3, 33) and the second (5, 35') elements each including a first (2, 4) and a second blind recess (27, 28) and the third element (7, 37, 37') including a first (6) and a second (24) through hole, the first through hole (6) of the third element (7, 37, 37') being placed facing the first blind recess (2, 4) of the first (3, 33) and second (5, 35') elements in each set (1, 31), the second through hole (24) of the third element (7, 37, 37') of a set (1, 31) being placed facing the second blind recess (27, 28) of the first (3, 33) and second (5, 35') elements of another set (1, 31), the attachment within each set (1, 31) and between the two sets (1, 31) being respectively provided by:
- a first rod (11) mounted in the first through hole (6) of the third element (7, 37, 37') and secured at its ends in the first blind recess (2, 4) of the first (3, 33) and second (5, 35') elements,
- a second rod (11') mounted in the second through hole (24) of the third element (7, 37, 37') and secured at its ends in the second blind recess (27, 28) of the first (3, 33) and second (5, 35') elements,
- said first rod (11) and said second rod (11') are respectively secured in the first blind recess (2, 4) and in the second blind recess (27, 28) with a glue (15),
- said first blind recess (2,4) and said second blind recess (27, 28) form a longitudinal zone (2a, 4a) for respectively housing the ends of the first (11) and of the second (11') rod, said longitudinal zone (2a, 4a) emerging on at least one cavity (2b, 4b) extending laterally with respect to said longitudinal zone (2a, 4a), said cavity (2b, 4b) accommodating the glue (15) and providing a mechanical attachment of the glue (15) in the first (3, 33) and second (5, 35') elements, the part (24, 15) being **characterised in that** said longitudinal zone (2a, 4a) emerges on two cavities (2b, 4b) extending laterally with respect to the longitudinal zone (2a, 4a), the two cavities (2b, 4b) being respectively positioned on each side of the longitudinal zone (2a, 4a).

2. Part (21, 51) according to claim 1, **characterised in that** the two cavities (2b, 4b) are positioned one facing the other on each side of the longitudinal zone (2a, 4a).

3. Part (21, 51) according to one of the preceding claims, **characterised in that** the longitudinal zone (2a, 4a) extends on either side of said at least one cavity (2b, 4b).

4. Part (21, 51) according to one of the preceding claims, **characterised in that** the first rod (11) and the second rod (11') include, at the ends thereof, a head (11a, 11'a) provided with a notch (11b, 11'b) over the periphery thereof, said notch (11b, 11'b) being filled with the glue (15) and positioned opposite said at least one cavity (2b, 4b).

5. Part (21, 51) according to one of the preceding claims, **characterised in that** at least one portion of the first and second elements (3, 5, 33, 35') is produced from an enamel, a stone, a sapphire, a cermet or a ceram ic.

6. Part (21, 51) according to one of the preceding claims, **characterised in that**, in each set, the third element (7, 37, 37') is formed by a plurality of elements (37, 37') with an intermediate element (35) disposed between each of said plurality of elements (37, 37').

7. Part (21, 51) according to one of the preceding claims, **characterised in that** the first through hole (6) and/or the second through hole (24) of the third element (7, 37, 37') include a cross section of non-circular shape corresponding to the shape respectively of the first and second rods (11, 11') in order to prevent any relative pivoting of the first, second and third elements (3, 5, 33, 35', 7, 37', 37).

8. Part (21, 51) according to one of claims 1 to 6, **characterised in that** the first through hole (6) and the second through hole (24) of the third element (7, 37, 37') include a cross section with a circular shape corresponding to that of the first and of the second rods (11, 11') in order to allow the pivoting of the third element (7, 37, 37') with respect to the first and second elements (3, 5, 33, 35').

9. Part (21, 51) according to one of the preceding claims, **characterised in that** it includes at least five sets (1, 31) connected together.

10. Part (21, 51) according to one of the preceding claims, **characterised in that** it is a case of a wristlet, a decorative item or a jewellery item.
